(19) Europäisches Patentamt
European Patent Office
Office européen des brevets

(11) Veröffentlichungsnummer : **0 037 951**
**B1**

# (12) EUROPÄISCHE PATENTSCHRIFT

(45) Veröffentlichungstag der Patentschrift : **28.12.83**

(51) Int. Cl.³ : **B 01 D 19/04**

(21) Anmeldenummer : **81102386.0**

(22) Anmeldetag : **30.03.81**

(54) **Organopolysiloxanhaltige Entschäumerzubereitung sowie Verfahren zu deren Herstellung.**

(30) Priorität : **11.04.80 DE 3013923**

(43) Veröffentlichungstag der Anmeldung : **21.10.81 Patentblatt 81/42**

(45) Bekanntmachung des Hinweises auf die Patenterteilung : **28.12.83 Patentblatt 83/52**

(84) Benannte Vertragsstaaten : **BE DE FR GB IT NL**

(56) Entgegenhaltungen :
**DE-A- 1 419 678**
**DE-A- 2 829 906**
**Die Akte enthält technische Angaben, die nach dem Eingang der Anmeldung eingereicht wurden und die nicht in dieser Patentschrift enthalten sind.**

(73) Patentinhaber : **BAYER AG**
**Zentralbereich Patente, Marken und Lizenzen**
**D-5090 Leverkusen 1, Bayerwerk (DE)**

(72) Erfinder : **Maas, Joachim, Dr.**
**Otto-Hahn-Strasse 25**
**D-5010 Bergheim (DE)**
Erfinder : **Steinberger, Helmut, Dr.**
**Winand-Rossi-Strasse 36**
**D-5090 Leverkusen (DE)**
Erfinder : **Moretto, Hans-Heinrich, Dr.**
**Formesstrasse 13**
**D-5000 Koeln 80 (DE)**

**EP 0 037 951 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Organopolysiloxanhaltige Entschäumerzubereitung sowie Verfahren zu deren Herstellung

Die Erfindung betrifft eine verbesserte Entschäumerzubereitung, die im wesentlichen aus wasserlöslichen Glykolen, einer $SiO_2$-Dispersion in Polysiloxan, Emulgatoren und gegebenenfalls Wasser besteht.

Es ist bekannt, Entschäumerzubereitungen aus Methyl-polysiloxan, feinverteiltem Füllstoff, Wasser und Emulgatoren herzustellen (vgl. z. B DE-C-1 067 003, DE-A-1 914 684 und DE-A-2 626 942). Diese bekannten Emulsionen weisen jedoch, vor allem im Hinblick auf ihre entschäumende Wirksamkeit, erhebliche Nachteile auf.

Siloxan-Polyoxyalkylen-Copolymere sind ebenfalls als Entschäumer vorgeschlagen worden (vgl. z. B. DE-A-2 123 573, DE-A-2 223 818, US-Patent 3 951 832, US-Patent 3 712 868 und US-Patent 3 233 986). Die Herstellung solcher Siloxan-Polyoxyalkylen-Copolymere ist jedoch mit einem erheblichen Aufwand verbunden. Dieser konnte etwas reduziert werden, wenn statt der Siloxan-Polyoxyalkylen-Copolymere freie Polyoxyalkylenglykole oder deren Derivate verwendet werden. So beschreibt z. B. BE-A- 713 652 den Einsatz von wasserlöslichen Glykolen, z. B. Polypropylenglykolen. Auch DE-A-1 444 442 und DE-A-2 112 579 sowie DE-A-2 829 909 verwenden für die Herstellung von Antischaummassen wasserunlösliche Glykole. DE-C-2 518 053 und DE-A-2 233 817 geben als untere Molekulargewichtsgrenze für den Einsatz von Polypropylenglykolen bzw. Polypropylenglycolpolyethylenglycolcopolymeren in entschäumenden Zubereitungen ein Molekulargewicht von 500 an, während in DE-B-2 222 998 sogar ein Mindestmolekulargewicht von 1 000 gefordert wird.

Nach diesem bekannten Stand der Technik kommen somit nur wasserunlösliche Glykole bzw. Glykole eines bestimmten Mindestmolekulargewichtes als wirksame Bestandteile von Entschäumerzubereitungen in Frage. Die Verwendung von wasserunlöslichen Glykolen bzw. Glykolen eines relativ hohen Molekulargewichtes bedingt jedoch daraus hergestellte Entschäumer mit schlechter Wasserverdünnbarkeit und hoher Viskosität, die nur beschränkt einsetzbar sind. Eine niedrige Viskosität erleichtert die Einbringung der Entschäumerzubereitung in das zu entschäumende Medium und das evtl. Verdünnen, z. B. mit Wasser.

Weiterhin ist der Einsatz von Polyglykolen in Antischaummassen in der Regel um so aufwendiger, je höher das Molekulargewicht des verwendeten Polyglykols ausfällt und je größer der Polyglykolanteil in der Zubereitung ist.

Es mußten daher Wege gesucht werden, weniger aufwendige Schaumbekämpfungsmittel mit niedrigerer Viskosität und besserer Wasserverdünnbarkeit unter Erhalt der guten entschäumenden Wirksamkeit, herzustellen. Ein Versuch, bessere Entschäumer zur Verfügung zu stellen, wurde gemäß DE-B-1 419 678 gemacht. Dabei handelt es sich um ein Verfahren zur Herstellung entschäumend wirkender Emulsionen, denen geringe Mengen (bis 5 Gew.-%) eines Polyethers zugesetzt wurden. Zwar wurden damit Verbesserungen erzielt, doch konnten diese Entschäumer auch noch nicht voll befriedigen.

Überraschenderweise wurde nun gefunden, daß das beschriebene Problem mit Entschäumerzubereitungen behoben werden kann, die im wesentlichen aus

1) 10-40 Gew.-% einer Dispersion von Siliciumdioxid-Füllstoff in Organopolysiloxanen,
2) 45-84 Gew.-% wasserlöslichen Verbindungen der folgenden allgemeinen Formeln

$$R_1O(-CH_2-CH_2-O)_nR_2,$$

$$R_1O(-CH_2\underset{CH_3}{CH}-O)_mR_2,$$

$$R_1O(-CH_2-CH_2-CH_2-O)_oR_2,$$

$$R_1O(CH_2-CH_2-O)_p(CH_2-\underset{CH_3}{CH}-O)_rR_2$$

wobei $R_1$ und $R_2$ unabhängig voneinander für Wasserstoff, einen Alkylrest mit 1-8 C-Atomen, oder für den Rest

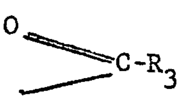

($R_3$ = Alkylrest mit 1 bis 8 C-Atomen) stehen, n und m, p, o und r so gewählt sind, daß das Molgewicht der

jeweiligen Verbindung 499 nicht übersteigt und wobei die mit p und r bezeichneten Gruppen sowohl statistisch verteilt als auch in Blöcken vorliegen können, und/oder wasserlösliche, zwei- und dreiwertige aliphatische Alkohole mit 2 bis 10 Kohlenstoffatomen und

3) 6-15 Gew.-% eines oder mehrerer Emulgatoren bzw. « Dispergatoren », wobei die Komponente 2) gegebenenfalls teilweise durch Wasser ersetzt werden kann

bestehen.

Die erfindungsgemäßen Entschäumerzubereitungen lassen sich nicht nur mit geringem Aufwand herstellen, sie weisen auch eine bessere Wasserverdünnbarkeit, geringere Viskosität und oft auch noch eine bessere entschäumende Wirksamkeit als die bekannten, dem Stand der Technik entsprechenden Entschäumer auf.

Als ein geeignetes Ausgangsprodukt für die erfindungsgemäße Entschäumerzubereichtung ist eine Organopolysiloxanflüssigkeit der allgemeinen Formel

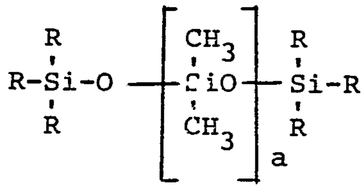

mit einer Viskosität im Bereich von etwa 20 bis 70 000 mPas bei 25 °C, vorzugsweise 500 bis 2 000 mPas, worin für R jeweils gleiche oder verschiedene Reste stehen können, die ausgewählt sind aus gegebenenfalls substituierten einwertigen Kohlenwasserstoffresten, wie aliphatischen, halogenaliphatischen und cyclo-aliphatischen Resten, z. B. Alkyl, Alkenyl, Cycloalkyl, Halogenalkyl, wie Methyl, Ethyl, Propyl, Chlorethyl, Trifluorpropyl, Phenyl, Tolyl, Benzyl oder aber OH oder Halogen, wobei a für eine Zahl steht, die ausreicht, die oben erwähnte Viskosität zu erreichen. Bevorzugt werden Dimethylpolysiloxane eingesetzt.

Es ist aber auch möglich, Organopolysiloxane mit verschiedenen Resten R und unterschiedlicher Kettenlänge miteinander zu mischen und anschließend eine Dispersion von Füllstoff in dem Organopolysiloxangemisch herzustellen.

Als $SiO_2$-Füllstoffe kommen alle bekannten, handelsüblichen $SiO_2$-Füllstoffe in Frage, wobei es sich um gefällte $SiO_2$-Füllstoffe oder aber auch um auf pyrogenem Wege erzeugte Füllstoffe handeln kann.

Die BET-Oberfläche sollte mindestens 50 $m^2/g$, vorzugsweise 200-400 $m^2/g$ betragen.

Die im Organopolysiloxan dispergierten Füllstoffmengen können zwischen 1 und 15 Gew.-%, bezogen auf Siloxan, liegen.

Die Herstellung der Füllstoff-Organopolysiloxan-Mischung kann in Kugelmühlen, Rührkesseln, Knetern und anderen, geeigneten Aggregaten sowohl bei Raumtemperatur als auch bei höheren Temperaturen bis ca. 200 °C erfolgen.

Die Zubereitung der Füllstoff-Organopolysiloxan-Mischungen ist dem Fachmann bekannt und ist nicht kritisch.

Bei den verwendeten Emulgatoren (im Falle wasserfreier Zubereitungen sollte eher von Dispergatoren gesprochen werden) handelt es sich um bekannte handelsübliche oxethylierte Fettalkohole, Fettsäuren, mehrwertige Alkohole oder deren Derivate oder ähnliche Verbindungen mit einem aktiven Wasserstoffatom wie auch Fettsäureester mehrwertiger Alkohole wie z. B. der Laurinsäureester von Glycerin oder Sorbit. Die angelagerte Menge Ethylenoxyd an vorgenannte Produkte kann unterschiedlich hoch sein ; sie entscheidet über die Hydrophilie und damit über die Höhe des dem Fachmann bekannten HLB-Wertes der Emulgatoren.

Geeignet sind aber auch anionenaktive Emulgatoren wie Natriumdodecylbenzol-sulfonat oder Natriumlaurylsulfat.

Bevorzugt eingesetzt wird eine Emulgatormischung aus einem oxethyliertem Fettalkohol und einem oxethylierten Triglycerid, wobei der eingestellte HLB-Wert vorzugsweise im Bereich von 11 bis 16 liegt.

Die zur Herstellung der Antischaummassen verwendeten wasserlöslichen Glykole können insbesondere Ethylenglykole, Di-, Tri-, Tetraethylenglykole sowie Polyethylenglykole und/oder deren Derivate wie Ether oder Ester sein oder aber auch Propylenglykole niedrigeren Molekulargewichtes wie z. B. Di-, Tri-, Tetrapropylenglykol oder 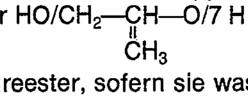 sowie die daraus hergestellbaren Ether wie Dimethylether und Ester wie Essigsäureester, sofern sie wasserlöslich sind. Gleichfalls geeignet sind Polyoxypropylenpolyoxyethylencopolymere niedrigeren Molekulargewichtes wie z. B.

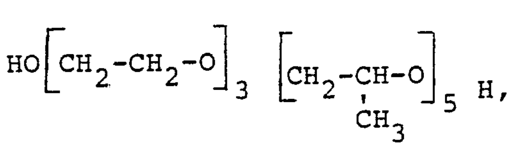

wobei die Propylenoxid- und die Ethylenoxideinheiten statistisch oder aber auch in Blöcken vorliegen können.

Für die Zubereitung der Antischaummassen eignen sich auch wasserlösliche aliphatische, zweiwertige Alkohole wie z. B. Propandiol-1,2 ; Propandiol-1,3 ; Butandiole ; Hexandiole etc. oder aber dreiwertige Alkohole wie z. B. Trimethylolpropan, Glycerin etc. Weiterhin sind auch Abmischungen zwischen den erwähnten Glykolen und/oder deren Derivaten (z. B. Ether, Ester) und/oder deren Copolymeren als erfindungsgemäße Zusätze zu verstehen.

Der Wasserzusatz zu den Entschäumerzubereitungen ist fakultativ. Er bewirkt in der Regel eine bessere Wasserverdünnbarkeit der Zubereitungen. Wasser kann bis zu 70 Gew.-% bevorzugt bis zu 45 Gew.-% — bezogen auf die gesamte Mischung zugesetzt werden.

Die Herstellung der erfindungsgemäßen Entschäumerzubereitungen kann in der Weise erfolgen, daß auf oben beschriebene Weise zuerst die Organopolysiloxan-Füllstoff-Dispersion hergestellt wird. Diese wird anschließend in einem Mischaggregat, z. B. Rührkessel, mit den Emulgatoren bzw. « Dispergatoren » bei Zimmertemperatur oder Temperaturen bis etwa 100 °C, vorzugsweise 60-70 °C, vermischt. Danach erfolgt die Zugabe von Glykol und bei Bedarf von Wasser.

Es ist auch möglich, Organopolysiloxan-Füllstoff-Dispersionen und Emulgatoren und evtl. Wasser zu homogenisieren und anschließend erst die Glykol-bzw. Glykol/Wasser-Zugabe vorzunehmen.

Ein kräftiges Homogenisieren der so erzeugten Zubereitungen wird z. B. mittels handelsüblicher, schnell rotierender Kolloidmühlen oder mittels mit starker Kompression arbeitender Homogenisatoren vorgenommen.

Die mengenmäßige Zusammensetzung der erfindungsgemäßen Entschäumer ist etwa wie folgt ;
Entschäumer ($SiO_2$/Polysiloxanen) : 10-40 Gew.-%, bevorzugt 25-35 Gew.-% ;
Wasserlösliche Verbindung : 45-84 Gew.-%, bevorzugt 53-67 Gew.-% ;
Emulgator : 6-15 Gew.-%, bevorzugt 8-12 Gew.-%.

Wasser kann teilweise anstelle der wasserlöslichen Verbindungen eingebracht werden.

Die schaumhemmende Wirkung der Entschäumerzubereitungen läßt sich auf folgende Weise prüfen :

Man stellt sich eine Tensidlösung eines handelsüblichen Alkylsulfonats her, die 5 g/l Alkylsulfonat enthält.

0,1 ml einer 10 Gew.-%igen Entschäumerverdünnung (0,002 88 g Silikon/100 ml Alkylsulfonatlösung) bzw. 0,5 und 0,25 ml einer 1 Gew.-%igen Entschäumerverdünnung (0,001 4 g bzw. 0,000 72 g Silikon/100 ml Alkylsulfonatlösung) werden in ein handelsübliches graduiertes Schaummeßgefäß (nach Schlachter-Dirkes) pipettiert und mit 100 ml Alkylsulfonatlösung, die 5 g/l Alkylsulfonat enthält, aufgefüllt. Innerhalb von 35 Sekunden wird die vorgelegte Lösung 50 mal mit einem pneumatisch angetriebenen Schlaggerät geschlagen. Der auf einem Metallstab von 12 mm Durchmesser aufgeschraubte Stempel des Schlaggerätes besteht aus Silikongummi eines Durchmessers von 42 mm und einer Dicke von 3 mm. In äquidistanten Abständen befinden sich 10 Löcher von 5 mm Durchmesser.

Bewertet wird die Schaumhöhe sofort nach Beendigung der Schlagzeit sowie die Zerfallszeit des Schaumes bis zum Erreichen der 100 ml-Marke (Höhe des Flüssigkeitsniveaus). Die erhaltenen Werte werden verglichen.

Die Wasserverdünnbarkeit der Entschäumerzubereitungen wird geprüft, indem eine 10 Gew.-%ige wäßrige Verdünnung der Entschäumerzubereitungen angesetzt wird. Hierbei werden Wasser und Entschäumer durch kurzes Umrühren in einem Becherglas vermischt. Es muß sich eine feinteilige Emulsion bilden, die nach 20 minütigem Stehenlassen keine fettartig-klumpigen Abscheidungen zeigt. Eventuell auftretende Aufrahmungen sollen sich durch Umschütteln wieder verteilen lassen.

Die Viskositäten der Entschäumer werden mit einem Haake-Kugelfall-Viskosimeter nach DIN 53 015 bestimmt.

In den nachfolgenden fünf ersten Beispielen werden jeweils erfindungsgemäße Entschäumerzubereitungen hinsichtlich entschäumender Wirksamkeit, Wasserverdünnbarkeit und Viskosität mit Zubereitungen verglichen, die bei sonst gleicher Zusammensetzung wasserunlösliche Glykole verwenden oder die keine Glykole enthalten.

Die erfindungsgemäßen Entschäumer A, B und C des Beispiels 1 besitzen eine bessere Wasserverdünnbarkeit als die Vergleichsentschäumer D und E bei besserer entschäumender Wirksamkeit. F lehrt, daß der Glykolzusatz die Entschäumerwirkung stark erhöht.

Die erfindungsgemäßen Antischaummassen A, B und C in Beispeil 2 und 3 weisen ebenfalls eine bessere Wasserverdünnbarkeit als die der Vergleichsbeispiele auf. Entschäumer G, Beispiel 3 enthält kein Glykol. Die entschäumende Wirkung der erfindungsgemäßen Entschäumer entspricht mindestens der der Vergleichsbeispiele, teilweise ist sie sogar noch besser.

Die erfindungsgemäßen Entschäumerzubereitungen 4A bis 4E besitzen eine bessere Wasserverdünnbarkeit als Vergleichsbeispiel 4F. Die Entschäumerzubereitung 4F ist wegen der starken Inhomogenität nicht verwendbar.

Im Beispiel 5 sind Wasserverdünnbarkeit und entschäumende Wirkung der erfindungsgemäßen Entschäumer A, B und C besser als die des Vergleichsbeispiels D. Die Viskosität der erfindungsgemäßen Entschäumer ist niedriger als die der Vergleichsbeispiele (Beispiel 4A muß mit 4F verglichen werden, 5A mit 5D).

Beispiel 1

846 g eines flüssigen Polydimethylsiloxans einer Viskosität von 1 400 mPas, 18 g eines SiOH-Gruppen-haltigen Polydimethylsiloxans mit 18 Gew. SiOH und einer Viskosität von 30 mPas sowie 36 g einer handelsüblichen pyrogenen Kieselsäure mit einer BET-Oberfläche von 380 $m^2/g$ werden 2 h in einer Kugelmühle gemischt. Anschließend wird diese Zusammensetzung 3 h bei 130 °C und 14 Torr (18,66 mbar) unter Rühren ausgeheizt. Die erhaltene Mischung ist eine sogenannte « Entschäumermasse ».

A. 150 g Entschäumermasse werden unter Rühren auf 65 °C erwärmt. Anschließend fügt man 7,5 g oxethyliertes Triglycerid, HLB-Wert 18,1, und 42,5 g oxethylierten Tridecylalkohol, HLB-Wert 11,4 hinzu. Nach Abkühlen auf 40 °C werden zu dieser Mischung 300 g Tripropylenglykol, Molekulargewicht 192, gegeben.

Nach 30-minütigem Nachrühren erfolgt eine 2-malige Homogenisierung der Entschäumerzubereitung bei 200 bar mittels einer handelsüblichen Homogenisiermaschine (Gann-Maschine, Typ HE 150, Nr. 1687).

B. Verfahrensweise und Mengen wie unter A, nur werden statt des Tripropylenglykols 300 g Polypropylenglykol, Molekulargewicht 423, eingesetzt.

C. Verfahrensweise und Mengen wie unter A, nur werden statt des Tripropylenglykols 300 g Ethylenglykol verwendet.

Vergleichsbeispiele

D. Verfahrensweise und Mengen wie unter A, jedoch wird Tripropylenglykol durch Polypropylenglykol, Molekulargewicht 1 000, ersetzt.

E. Verfahrensweise und Mengen wie unter A ; statt des Tripropylenglykols wird Polypropylenglykol, Molekulargewicht 2 000, eingesetzt.

F. Verfahrensweise und Mengen wie unter A ; jedoch wird das Glykol durch Wasser ersetzt.

Die nachfolgende Tabelle I gibt über die entschäumende Wirksamkeit, Wasserverdünnbarkeit und Viskosität der Entschäumer A-F Aufschluß.

Tabelle I

| Beispiel | Wasserverdünnbarkeit | Entschäumende Wirkung Schaumhöle [ml]/ Schaumzerfallzeit [s]* 0,002 88 g★ | 0,001 44 g★ | 0,000 72 g★ | Visko-sität [mPas] |
|---|---|---|---|---|---|
| Erfindungsgemäße Entschäumerzubereitungen | | | | | |
| A | gut ; feinteilige Emulsion, keine Abscheidungen | 50/<3* | 50/<3 | 50/5 | 602 |
| B | mittel ; jedoch Abscheidung sehr feiner Teilchen an Glaswandung | 50/<3 | 50/7 | 100/35 | 875 |
| C | — " — | 40/<3 | 50/6 | 100/27 | 253 |
| Vergleichsbeispiele | | | | | |
| D | nicht gut, Abscheidung großer Siliconteilchen an Gefäßwandung | 50/<3 | 50/11 | 100/87 | 1 900 |
| E | sehr schlecht, Abscheidung sehr großer Klumpen in Lösung und an Gefäßwandung | Bestimmung der entschäumenden Wirkung aufgrund Klumpenbildung nicht möglich | | | 3 130 |
| F | gut, keine Abscheidung | 100/55 | 200/120 | 250/120 | 100 |

* die erste Zahl gibt die Schaumhöhe in ml, die zweite Zahl die Schaumzerfallzeit in s an

★ g Silikon/100 ml Alkylsulfonatlösung

Beispiel 2

Herstellung der « Entschäumermasse » wie in Beispiel 1.

A. 150 g Entschäumermasse werden unter Rühren auf 65 °C erwärmt. Anschließend fügt man 7,5 g oxethyliertes Triglycerid und 42,5 g oxethylierten Tridecylalkohol wie in Beispiel 1 A zu.

Zu dieser Mischung dotiert man 180 g Tripropylenglykol ; nach 15-minütigem Rühren ebenfalls

innerhalb von 15 Min. 120 g Wasser. Homogenisierung wie in Beispiel 1.

B. Verfahrensweise und Mengen wie unter A, nur werden statt des Tripropylenglykols 180 g Polypropylenglykol, Molekulargewicht 423, eingesetzt.

C. Verfahrensweise und Mengen wie unter A, jedoch Verwendung von 180 g Ethylenglykol.

Vergleichsbeispiele

D. Vorgehen wie unter A, nur Einsatz von 180 g Polypropylenglykol, Molekulargewicht 1 000.

E. Verfahrensweise und Mengen wie unter A, jedoch kommen 180 g Polypropylenglykol, Molekulargewicht 2 000 zur Anwendung.

Die Ergebnisse zeigt Tabelle II.

Tabelle II

| Beispiel | Wasserverdünnbarkeit | Entschäumende Wirkung Schaumhöhe [ml]/ Schaumzerfallzeit [s] 0,002 88 g | 0,001 44 g | 0,000 72 g | Viskosität [mPas] |
|---|---|---|---|---|---|
| Erfindungsgemäße Entschäumerzubereitungen | | | | | |
| A | gut ; keine Abscheidungen | 50/<3 | 50/7 | 100/37 | 133 |
| B | gut ; keine Abscheidungen | 50/<3 | 50/8 | 100/48 | 218 |
| C | gut ; keine Abscheidungen | 40/<3 | 50/5 | 100/19 | 159 |
| Vergleichsbeispiele | | | | | |
| D | schlechter als bei A-C, sehr feine Teilchen scheiden sich ab | 60/3 | 50/3 | 50/8 | 752 |
| E | sehr schlecht, Klumpenbildung, starke Abscheidung zusammengeballter, fettartiger Agglomerate | Aufgrund der Klumpenbildung keine Vermessung möglich | | | 1 866 |

Beispiel 3

Herstellung der « Entschäumermasse » wie in Beispiel 1.

A. 150 g Entschäumermasse werden unter Rühren auf 65 °C erwärmt. Anschließend fügt man 22,4 g oxethyliertes Triglycerid und 27,6 g oxethylierten Tridecylalkohol wie in Beispiel 1 zu.

Zu dieser Mischung werden 90 g Ethylenglykol gegeben und 15 Min. gerührt. Danach erfolgt Zugabe von 210 g Wasser innerhalb von weiteren 15 Min. Homogenisierung wie in Beispiel 1.

B. Wie 3A, nur Einsatz eines Gemisches von 45 g Ethylenglykol und 45 g Tripropylenglykol statt 90 g Ethylenglykol.

C. Wie 3A, nur Verwendung eines Gemisches von 45 g Ethylenglykol und 45 g Polypropylenglykol, Molekulargewicht 423, statt 90 g Ethylenglykol.

Vergleichsbeispiele

D. Wie 3A, jedoch wird statt 90 g Ethylenglykol eine Mischung aus 45 g Ethylenglykol und 45 g Polypropylenglykol, Molekulargewicht 2 000, eingesetzt.

E. Wie 3A, jedoch statt 90 g Ethylenglykol 45 g Ethylenglykol und 45 g Polypropylenglykol, Molekulargewicht 4 000.

F. Wie 3A, jedoch statt der 90 g Ethylenglykol Verwendung von 90 g Polypropylenglykol, Molekulargewicht 2 000.

(Siehe Tabelle III Seite 7 f.)

Tabelle III

| Beispiel | Wasserverdünnbarkeit | Entschäumende Wirkung Schaumhöhe [ml]/ Schaumzerfallzeit [s] 0,002 88 g | 0,001 44 g | 0,000 72 g | Viskosität [mPas] |
|---|---|---|---|---|---|
| Erfindungsgemäße Entschäumerzubereitungen | | | | | |
| A | gut, keine Abscheidungen | 60/12 | 100/98 | 200/120 | 223 |
| B | gut, keine Abscheidungen | 50/4 | 50/5 | 50/23 | 140 |
| C | gut, keine Abscheidungen | 50/4 | 100/23 | 100/69 | 113 |
| Vergleichsbeispiele | | | | | |
| D | weniger gut, feinteilige Abscheidungen | 60/14 | 100/89 | 200/120 | 499 |
| E | sehr schlecht, Bildung von Klumpen | 50/8 | 100/52 | 200/120 | 437 |
| F | sehr schlecht, Klumpen in Emulsion | 50/4 | 50/15 | 50/73 | 1 465 |
| G | gut, keine Abscheidungen | 120/113 | 250/120 | 300/120 | 82 |

Beispiel 4

Herstellung der « Entschäumermasse » wie in Beispiel 1.

A. 150 g Entschäumermasse werden unter Rühren auf 65 °C erwärmt. Danach erfolgt Zugabe von 7,5 g oxethyliertem Triglycerid und 42,5 g oxethyliertem Tridecylalkohol gemäß Beispiel 1.

Nach Abkühlen auf 40 °C werden in diesen Ansatz 150 g Tetraethylenglykol und 150 g Tripropylenglykol eingerührt. Homogenisierung entsprechend Beispiel 1.

B. Verfahrensweise und Mengen wie unter A, nur werden statt 150 g Tetraethylenglykol und 150 g Tripropylenglykol zuerst 180 g Diethylenglykol, danach 120 g Wasser eingesetzt. Homogenisierung entsprechend Beispiel 1.

C. Wie Beispiel 4B, jedoch werden nicht 180 g Diethylenglykol, sondern 180 g Triethylenglykol verwendet.

D. Wie Beispiel A ; statt der dort eingesetzten Glykole werden dem Ansatz 150 g Diethylenglykol und 150 g Polypropylenglykol, Molekulargewicht 423, hinzugefügt.

E. Wie Beispiel A ; jedoch Zugabe von 150 g Octaethylenglykol und 150 g Polypropylenglykol, Molekulargewicht 423, statt der in A eingesetzten Glykole.

Vergleichsbeispiel

F. Wie Beispiel A ; das Tripropylenglykol wird durch Polypropylenglykol, Molekulargewicht 2 000, ersetzt.

(Siehe Tabelle IV Seite 8 f.)

Tabelle IV

| Beispiel | Wasserverdünnbarkeit | Entschäumende Wirkung Schaumhöhe [ml]/ Schaumzerfallszeit [s] 0,002 88 g | 0,001 44 g | 0,000 72 g | Viskosität [mPas] |
|---|---|---|---|---|---|
| Erfindungsgemäße Entschäumerzubereitungen | | | | | |
| A | mittelmäßig, geringe Abscheidungen, beobachtbar | 50/4 | 50/16 | 150/96 | 1 404 |
| B | " | 50/3 | 50/4 | 50/10 | 158 |
| C | " | 50/3 | 50/6 | 50/14 | 191 |
| D | " | 50/5 | 50/8 | 100/30 | 511 |
| E | " | 50/3 | 100/25 | 250/63 | 303 |
| Vergleichsbeispiel | | | | | |
| F | sehr schlecht, starke Verklumpungen, Abscheidungen großer fladenartiger Agglomerate | Aufgrund der Klumpenbildung sind Vermessungen nicht möglich | | | 2 225 |

Beispiel 5

Herstellung der « Entschäumermasse » wie in Beispiel 1.

A. 150 g Entschäumermasse werden mit 7,5 g oxethyliertem Triglycerid und 42,5 g oxethyliertem Tridecylalkohol wie in Beispiel 1A versetzt. Nach Abkühlen werden 90 g eines auf Trimethylolpropan gestarteten Copolymeren (Copolymer enthält 70 Gew.-% Propylenglykol und 30 Gew.-% Ethylenglykoleinheiten) mit einem Molekulargewicht von 445 hinzugefügt.

Anschließend erfolgt Zugabe von 210 g Wasser. Homogenisierung wie in Beispiel 1A.

B. Wie A, nur 180 g Copolymer und 120 g Wasser eingesetzt.

C. 150 g Entschäumermasse mit 7,5 g oxethyliertem Triglycerid und 42,5 g oxethyliertem Tridecylalkohol wie in Beispiel 1A versetzt. Nach Abkühlen werden 300 g eines auf Trimethylolpropan gestarteten Copolymeren (Copolymer enthält 33,3 Gew.-% Propylenglykol- und 66,7 Gew.-% Ethylenglykoleinheiten), mit einem Molekulargewicht von 265 eingemischt. Homogenisierung wie in Beispiel 1A.

Vergleichsbeispiel

D. Wie A, nur werden statt des dort beschriebenen Copolymeren 90 g eines Copolymeren folgender Zusammensetzung verwendet : 70 Gew.-% Propylenglykol- und 30 Gew.-% Ethylenglykoleinheiten ; Molekulargewicht 2 000.

Die Ergebnisse sind in Tabelle V dargestellt.

(Siehe Tabelle V Seite 9 f.)

Tabelle V

| Beispiel | Wasserverdünnbarkeit | Entschäumende Wirkung Schaumhöhe [ml]/ Schaumzerfallszeit [s] 0,002 88 g★ | 0,001 44 g★ | 0,000 72 g★ | Viskosität [mPas] |
|---|---|---|---|---|---|
| Erfindungsgemäße Entschäumerzubereitungen | | | | | |
| A | gut, nur sehr geringe Abscheidungen | 50/3$^{x}$ | 50/5 | 50/11 | 74* |
| B | gut, nur sehr geringe Abscheidungen | 50/3 | 50/4 | 50/7 | 231 |
| C | gut, keine Abscheidungen | 50/3 | 50/5 | 50/20 | 5 562 |
| Vergleichsbeispiel | | | | | |
| D | mäßig, stärkere Abscheidungen | 50/4 | 50/9 | 100/36 | 190* |
| Bemerkung | | | | | |

* Beispiel A und D müssen verglichen werden
★ g Silikon/100 ml Alkylsulfonatlösung

Beispiel 6

Herstellung der Entschäumermasse wie in Beispiel 1.

A. 150 g Entschäumermasse werden mit 7,5 g oxethyliertem Triglycerid und 42,5 g oxethyliertem Tridecylalkohol wie in Beispiel 1A versetzt. Nach dem Abkühlen wird ein Gemisch aus 90 g Ethylenglykol und 90 g Propandiol-1,2 portionsweise hinzugefügt. Danach erfolgt Zugabe von 120 g Wasser. Homogenisierung wie in Beispiel 1A.

B. 150 g Entschäumermasse werden mit 22,4 g oxethyliertem Triglycerid und 27,6 g oxethyliertem Tridecylalkohol wie in Beispiel 3A versetzt. Anschließend fügt man ein Gemisch aus 90 g Ethylenglykol und 90 g Glycerin hinzu ; danach 120 g Wasser. Homogenisierung wie in Beispiel 1A.

C. 150 g Entschäumermasse werden mit 7,5 g oxethyliertem Triglycerid und 42,5 g oxethyliertem Tridecylalkohol wie in Beispiel 1A vermischt. Nach dem Abkühlen erfolgt Zugabe von 90 g Ethylenglykolmethyletheracetat. Nach dem Zusetzen von 210 g Wasser Homogenisierung wie in Beispiel 1A.

D. Wie 6C, nur werden statt des Ethylenglykolmethyletheracetats 90 g Butandiol-2,3 verwendet.

E. Wie 6C, nur erfolgt Dotierung von 90 g Diethylenglykoldimethylether statt des Ethylenglykolmethyletheracetates.

Werte wie in Tabelle VI gezeigt.

Tabelle VI

| Beispiel | Wasserverdünnbarkeit | Entschäumende Wirkung Schaumhöhe [ml]/ Schaumzerfallszeit [s] 0,002 88 g | 0,001 44 g | 0,000 72 g | Viskosität [mPas] |
|---|---|---|---|---|---|
| A | gut, nur sehr geringe Abscheidungen | 50/4 | 50/11 | 100/49 | 118 |
| B | gut, keine Abscheidungen | 70/10 | 100/55 | 200/120 | 444 |
| C | gut, keine Abscheidungen | 50/3 | 50/5 | 50/12 | 30 |
| D | gut, keine Abscheidungen | 50/3 | 50/4 | 50/20 | 68 |
| E | gut, keine Abscheidungen | 50/4 | 50/12 | 100/49 | 59 |

**Ansprüche**

1. Entschäumerzubereitungen, bestehend im wesentlichen aus
   1) 10-40 Gew.-% einer Dispersion von Siliciumdioxid-Füllstoff in Organopolysiloxanen,
   2) 45-84 Gew.-% wasserlöslichen Verbindungen der folgenden allgemeinen Formeln

$$R_1O(-CH_2-CH_2-O)_nR_2,$$

$$R_1O(-CH_2\underset{CH_3}{\underset{|}{C}}H-O)_mR_2,$$

$$R_1O(-CH_2-CH_2-CH_2-O)_oR_2,$$

$$R_1O(CH_2-CH_2-O)_p(CH_2-\underset{CH_3}{\underset{|}{C}}H-O)_rR_2$$

wobei $R_1$ und $R_2$ unabhängig voneinander für Wasserstoff, einen Alkylrest mit 1-8 C-Atomen, oder für den Rest

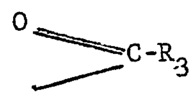

($R_3$ = Alkylrest mit 1 bis 8 C-Atomen) stehen, n und m, p, o und r so gewählt sind, daß das Molgewicht der jeweiligen Verbindung 499 nicht übersteigt und wobei die mit p und r bezeichneten Gruppen sowohl statistisch verteilt als auch in Blöcken vorliegen können, und/oder wasserlösliche, zwei- und dreiwertige aliphatische Alkohole mit 2 bis 10 Kohlenstoffatomen und

3) 6-15 Gew.-% eines oder mehrerer Emulgatoren bzw. « Dispergatoren », wobei die Komponente 2) gegebenenfalls teilweise durch Wasser ersetzt werden kann.

2. Entschäumerzubereitung gemäß Anspruch 1, dadurch gekennzeichnet, daß als wasserlösliche Verbindung Tripropylenglykol eingesetzt wird.

3. Entschäumerzubereitung gemäß Anspruch 1, dadurch gekennzeichnet, daß als wasserlösliche Verbindung Polypropylenglykol mit einem Molekulargewicht unter 500 eingesetzt wird.

4. Verfahren zur Herstellung von Entschäumerzubereitungen gemäß einem der Ansprüche 1 bis 3, dadurch gekennzeichnet, daß zu einer Dispersion von $SiO_2$-Füllstoffen in Organopolysiloxan zunächst die Emulgatoren bzw. Dispergatoren unter gleichzeitiger Erwärmung bis zu etwa 70 °C zugesetzt werden und anschließend die wasserlöslichen Substanzen unter Rühren bei Raumtemperatur zugegeben werden.

5. Verfahren nach Anspruch 4, dadurch gekennzeichnet, daß Wasser zusammen mit den wasserlöslichen Verbindungen zugesetzt wird.

## Claims

1. Anti-foam formulations, essentially consisting of

1) 10-40 % by weight of a dispersion of a silicon dioxide filler in organopolysiloxanes,

2) 45-84 % by weight of water-soluble compounds of the following general formulae

$$R_1O(-CH_2-CH_2-O)_nR_2,$$

$$R_1O(-CH_2\underset{CH_3}{\underset{|}{C}}H-O)_mR_2,$$

$$R_1O(-CH_2-CH_2-CH_2-O)_oR_2,$$

$$R_1O(CH_2-CH_2-O)_p(CH_2-\underset{CH_3}{\underset{|}{C}}H-O)_rR_2$$

wherein $R_1$ and $R_2$ independently of one another represent hydrogen, an alkyl radical with 1-8 C atoms or the radical

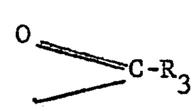

($R_3$ = an alkyl radical with 1 to 8 C atoms), and n and m, p, o and r are selected such that the molecular

weight of the particular compound does not exceed 499, and wherein the groups identified by p and r may be present either in random distribution or in blocks, and/or water-soluble, dihydric and trihydric aliphatic alcohols with 2 to 10 carbon atoms and

3) 6-15 % by weight of one or more emulsifiers or « dispersants », it being possible for component 2) optionally to be partly replaced by water.

2. Anti-foam formulation according to Claim 1, characterised in that tripropylene glycol is used as the water-soluble compound.

3. Anti-foam formulation according to Claim 1, characterised in that polypropylene glycol having a molecular weight of below 500 is used as the water-soluble compound.

4. Process for the preparation of anti-foam formulations according to one of Claims 1 to 3, characterised in that first the emulsifiers or dispersants are added to a dispersion of $SiO_2$ fillers in organopolysiloxane, with simultaneous warming to about 70 °C, and then the water-soluble substances are added whilst stirring at room temperature.

5. Process according to Claim 4, characterised in that water is added together with the water-soluble compounds.

## Revendications

1. Compositions antimousses consistant essentiellement en :

1) 10 à 40 % en poids d'une dispersion d'une matière de charge consistant en silice dans des organopolysiloxannes,

2) 45 à 84 % en poids de composés hydrosolubles aux formules générales suivantes

$$R_1O(-CH_2-CH_2-O)_nR_2,$$

$$R_1O(-CH_2\underset{CH_3}{CH}-O)_mR_2,$$

$$R_1O(-CH_2-CH_2-CH_2-O)_oR_2,$$

$$R_1O(CH_2-CH_2-O)_p(CH_2-\underset{CH_3}{CH}-O)_rR_2$$

dans lesquelles $R_1$ and $R_2$ représentent chacun, indépendamment l'un de l'autre, l'hydrogène, un groupe alkyle en $C_1$-$C_8$ ou le reste

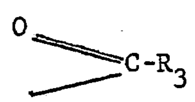

($R_3$ = groupe alkyle en $C_1$-$C_8$), n et m, p, o et r étant choisis de manière que le poids moléculaire du composé correspondant ne dépasse pas 499, les groupes affectés des indices p et r pouvant être présents en répartition statistique ou en blocs, et/ou d'alcools aliphatiques hydrosolubles di- et tri-valents en $C_2$-$C_{10}$, et

3) 6 à 15 % en poids d'un ou plusieurs agents émulsionnants ou « dispersants », le composant 2) pouvant le cas échéant être remplacé en partie par de l'eau.

2. Composition antimousse selon la revendication 1, caractérisée en ce que l'on utilise en tant que composé hydrosoluble le tripropylène-glycol.

3. Composition antimousse selon la revendication 1, caractérisée en ce que l'on utilise en tant que composé hydrosoluble un polypropylène-glycol de poids moléculaire inférieur à 500.

4. Procédé de préparation des compositions antimousses selon l'une des revendications 1 à 3 caractérisé en ce que, à une dispersion de matière de charge consistant en $SiO_2$ dans un organopolysiloxanne, on ajoute d'abord les agents émulsionnants ou dispersants en chauffant simultanément à une température allant jusqu'à 70 °C environ et on ajoute ensuite sous agitation, à température ambiante, les substances hydrosolubles.

5. Procédé selon la revendication 4, caractérisé en ce que l'on ajoute l'eau avec les composés hydrosolubles.